# EUROPEAN PATENT APPLICATION

(11) **EP 4 700 054 A1**
(43) Date of publication of application: **25.02.2026**
(21) Application number: 24195377.7
(22) Date of filing: 20.08.2024
(51) Int. Cl.: C08G 18/20, C08G 18/24, C08G 18/32, C08G 18/50, C08G 18/66, C08G 18/79, C08K 7/22, C09J 175/02, C09J 175/04, C08J 9/32

(54) **THERMALLY DEBONDABLE ONE-COMPONENT POLYUREA ADHESIVE COMPOSITION**

(71) Applicant: Henkel AG & Co. KGaA, 40589 Düsseldorf (DE)
(72) Inventor: Migliore, Nicola, 40227 Düsseldorf (DE); Kohlstrung, Rainer, 68723 Plankstadt (DE); Franken, Uwe, 41542 Dormagen (DE)

(57) **Abstract**

The present invention relates to a thermally debondable one-component polyurea adhesive composition comprising a) dimeric toluene 2,4-diisocyanate; b) a first amine; c) a second amine; d) a curing agent; and e) thermally expandable thermoplastic microspheres.

## Description

### Technical field

The present invention relates to a thermally debondable one-component polyurea adhesive composition, which is particularly suitable for use in e-mobility related components.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Also, water-based systems and UV activated acrylates have been used in the past as debonding adhesive layers. However, despite of the good debonding efficacy, the adhesion strength at room temperature, the poor adhesion on substrates like PP, PET or e-coated steel, and the poor compatibility with polyurethane thermal conductive adhesive were found dissatisfactory.

Therefore, there remains a need in the art to provide means to effectively debond bonded substrates, especially bonded structures in batteries of electronic vehicles and consumer electronics, while maintaining optimum adhesion and mechanical properties of the adhesive.

### Summary of the invention

The present invention relates to a thermally debondable one-component polyurea adhesive composition comprising a) dimeric toluene 2,4-diisocyanate; b) a first amine; c) a second amine; d) a curing agent; and e) thermally expandable thermoplastic microspheres.

The present invention also relates to cured thermally debondable one-component polyurea adhesive composition according to the present invention.

The present invention encompasses use of thermally debondable one-component polyurea adhesive composition or cured product according to the present invention in a bonded structure.

The present invention also encompasses a bonded structure comprising: a first substrate; a second substrate; a thermally debondable one-component polyurea adhesive composition layer or cured product layer according to the present invention; and an adhesive layer, wherein the thermally debondable one-component polyurea adhesive composition is disposed on a surface of the first substrate and/or on a surface of the second substrate and wherein the adhesive layer is placed on top of the thermally debondable one-component polyurea adhesive composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

The present invention relates to a method of debonding said bonded structure according to the present invention, the method comprising the steps of: i) applying a heat; and, ii) debonding the surfaces, wherein the temperature applied in step i) is preferably from 80 to 200°C, and it is preferably applied preferably for a duration of from 7 seconds to 60 minutes.

### Short summary of the figures

Figure 1 illustrates tensile lap shear strength of TEROSON EP5065 in combination with composition according to the present invention layer on Al3003 substrate.
Figure 2 illustrates tensile lap shear strength of TEROSON EP5065 and TEROSON MS939 in combination with composition according to the present invention layer on Al3003 substrate.
Figure 3 illustrates tensile lap shear strength of TEROSON EP5065 in combination with composition according to the present invention layer on e-coated steel substrate.
Figure 4 illustrates tensile lap shear strength of TEROSON EP5065 in combination with composition according to the present invention layer on a combination of AL3003 and e-coated steel substrates.
Figure 5 illustrates Tensile lap shear strength of LOCTITE UK2073/2173 in combination with composition according to the present invention layer on PC.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein the term *"debondable"* means that, after curing of the adhesive, the bond strength can be weakened by at least 50% upon application of temperature of from 60 to 200 °C for a duration of from 15 seconds to 60 minutes. Bond strength is measured by Tensile Lap Shear (TLS) test performed at room temperature and based upon EN 1465:2009 (German version) Based on Adhesives - Determination of tensile lap-shear strength of bonded assemblies.

The molecular weights referred to in this specification can be measured with gel permeation chromatography (GPC) using polystyrene calibration standards, such as is done according to ASTM 3536.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a thermally debondable one-component polyurea adhesive composition comprising a) dimeric toluene 2,4-diisocyanate; b) a first amine; c) a second amine; d) a curing agent; and e) thermally expandable thermoplastic microspheres.

The composition according to the present invention comprises polyurea formed from a reaction mixture of an isocyanate, a first amine and a second amine. The first and second amines will react or cure with the isocyanate to form a polyurea.

The Applicant has found out that the composition according to the present invention has an optimised activation temperature for high temperature curing system >90°C; a great adhesion on metal and e-coated metal surfaces; high lap shear strength (10 MPa), also at 60°C (>5.8 MPa) in combination with structural adhesive, making the composition according to the present invention particularly suitable for battery lids; and significant reduction of adhesion strength after heat activation leading to easy debonding.

The thermally debondable one-component polyurea adhesive composition according to the present invention comprises dimeric toluene 2,4-diisocyanate (TDI), which acts as a cross-linking agent. Suitable commercially available dimeric toluene 2,4-diisocyanate for use in the present invention include but is not limited to Addolink TT from RC Rhein Chemie.

Dimeric toluene 2,4-diisocyanate may be present in an amount from 3 to 18% by weight of the total weight of the composition, preferably from 5 to 16%, and more preferably from 8 to 14%.

The above defined and preferred ranges may be ideal to gain good reaction speed with good physical and mechanical properties. Quantities less than 3% may not lead to too slow reaction rate for industrial level, whereas too high quantities, more than 18%, may lead to too brittle material.

The thermally debondable one-component polyurea adhesive composition according to the present invention comprises a first amine. The first amine acts as a hardener.

Suitable first amine for use in the present invention is preferably a di- or trifunctional aliphatic or cycloaliphatic amine having a molecular weight (Mn) more than 2000 g/mol, preferably more than 3000 g/mol.

Non-limiting examples of suitable first amines are diamino- and triamino polypropylene ethers, diamino- and triamino polyethylene ethers, polyoxypropylentriamines, polyoxyethylentriamines, polyoxypropylendiamines, polyoxyethylendiamines. amino terminated polypropylene glycols, amino terminated polyethylene glycols, copolymers of amino terminated polypropylene glycols and amino terminated polyethylene glycols, and mixtures thereof.

In a preferred embodiment, the first amine is trifunctional primary aliphatic polyether amine.

Suitable commercially available first amine for use in the present invention include but is not limited to Jeffamine T5000 from Huntsman.

The first amine may be present in an amount from 30 to 50% by weight of the total weight of the composition, preferably from 33 to 47%, and more preferably from 36 to 44%.

The above defined and preferred ranges may be ideal to gain good physical and mechanical properties. Quantities less than 30% may lead to inflexible material with poor debonding properties, whereas too high quantities, more than 50%, may lead to decrease of adhesion strength.

The thermally debondable one-component polyurea adhesive composition according to the present invention comprises a second amine. The second amine acts as a hardener.

Suitable second amine for use in the present invention is preferably a di- or trifunctional aliphatic or cycloaliphatic amine having a molecular weight (Mn) less than 1000 g/mol.

The second amine having a lower molecular weight forms the protective urea shell around the TDI dimer particles.

Suitable second amines for use in the present invention are for example primary and secondary aliphatic and cycloaliphatic mono- or di- or tri-polyamines, hydrazine derivatives. amides, guanidines and mixtures thereof.

Non-limiting examples of suitable second amines are ethylene diamine, 1,3-propylene diamine, diethylene triamine, 2,5-dimethylopiperazine, 3,3'-dimethyl-4,4'-diamino-dicyclohexylmethane, methylnonanediamine, isophrone diamine, 4,4-diaminodicyclohexylmethane, diamino- and triamino polypropylene ethers, amino terminated polypropylene glycols, amino terminated polyethylene glycols, or copolymers of amino terminated polypropylene glycols and amino terminated polyethylene glycols, 3-aminomethyl-3,5,5-trimethylcyclohexylamine, polyoxypropylendiamines, polyoxyethylentriamines polyoxypropylendiamines, polyoxyethylendiamines, and mixtures thereof,

In a preferred embodiment, the second amine is 3-aminomethyl-3,5,5-trimethylcyclohexylamine.

Suitable commercially available second amine for use in the present invention include but is not limited to Vestamin IPD from Evonik.

The second amine may be present in an amount from 0.01 to 2% by weight of the total weight of the composition, preferably from 0.05 to 1%, and more preferably from 0.05 to 0.5%.

The above defined and preferred ranges may be ideal to gain stable product with good physical and mechanical properties. Quantities less than 0.01% may not be enough to provide a shell layer around isocyanate particles, and therefore, may not provide required stability, whereas too high quantities, more than 2%, may negatively effect on mechanical properties.

The thermally debondable one-component polyurea adhesive composition according to the present invention comprises a curing agent.

Suitable curing agent for use in the present invention may be aliphatic, cycloaliphatic or aromatic amine.

Suitable curing agent may be selected from the group consisting of diethyltoluenediamine, 4,4-methylenebis(2-chloroaniline), 4-diaminodicyclohexylmethane, bis-(p-aminocyclohexyl) methane, and mixtures thereof, preferably the curing agent is diethyltoluenediamine.

The curing agent may be present in an amount from 0.5 to 10% by weight of the total weight of the composition, preferably from 1 to 7%, and more preferably from 2 to 5%.

The above defined and preferred ranges may be ideal to gain good cross-linking degree, mechanical strength, elongation and stability.

The thermally debondable one-component polyurea adhesive composition according to the present invention comprises thermally expandable thermoplastic microspheres. Thermally expandable thermoplastic microspheres expand upon exposure to elevated temperature and by expanding, they enable the debonding effect.

Suitable thermally expandable thermoplastic microspheres have a core-shell structure, and wherein the shell is formed from cross-linked polymer and the core is composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1 ,2-propylene glycol diacrylate, 1 ,2-propylene glycol dimethacrylate, 1 ,4-butanediol diacrylate, 1 ,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate. A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each. Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30 wt%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, particularly tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. Said blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least 4 carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a particle size from 5 to 100 µm, preferably from 8 to 75 µm, preferably from 9 to 50 µm, more preferably from 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when they are exposed to a heat, preferably when exposed to a heat of from 80 to 200°C, preferably from 100 to 160 °C, more preferably from 120 to 155°C.

The heat source may be for example a thermal source, a sonication probe or an electromagnetic source.

Suitable commercially available thermally expandable thermoplastic microspheres for use in the present invention include but is not limited to Expanecel 920 DU40 from Nouryon.

The thermally expandable thermoplastic microspheres may be present from 10 to 50% by weight based on the total weight of the first part of the composition, preferably from 20 to 45% and more preferably from 25 to 40%.

The above defined and preferred ranges may be ideal to break the bond line while maintaining low solid content in the composition. Quantities less than 10% may not lead to a complete bond break, whereas too high quantities, more than 50%, may increase the solid content of the composition too high without providing any additional technical benefit.

The thermally debondable one-component polyurea adhesive composition according to the present invention may further comprise a catalyst.

In a highly preferred embodiment, the composition according to the present invention comprises a mixture of two catalysts.

Suitable catalysts for use in the present invention include but are not limited to: stannous salts of carboxylic acids, such as stannous octoate, stannous oleate, stannous acetate and stannous laureate; dialkyltin dicarboxylates, such as dibutyltin dilaureate, dimethyltin carboxylate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine.

In a highly preferred embodiment, the catalysts is a mixture of dimethyltin carboxylate and 1,4-diazabicyclo[2.2.2]octane.

The catalyst may be present from 0.01 to 3% by weight based on the total weight of the first part of the composition, preferably from 0.05 to 2% and more preferably from 0.1 to 1.5%.

The above defined and preferred ranges may be ideal to gain good reaction speed. Quantities less than 0.01% may lead to too slow reaction rate for industrial level, whereas too high quantities, more than 3%, may lead to too fast reaction rate.

The thermally debondable one-component polyurea adhesive composition according to the present invention may further comprise a plasticiser. The plasticiser improves flexibility of the composition according to the present invention.

Suitable plasticizer for use in the present invention may be selected from the group consisting of ethers of monofunctional, linear or branched C4-C16 alcohols; esters of abietic acid, butyric acid, thiobutyric acid, and propionic acid esters; esters based on nitrocellulose and polyvinyl acetate; dicarboxylic acid esters; glycolic acid esters; benzoic acid esters; phosphoric acid esters; sulfonic acid esters; trimellitic acid esters; end-capped polyethylene, polypropylene glycols, bifunctional polyether polyol, phthalates, and mixtures thereof.

In a highly preferred embodiment, the plasticiser is diisononyl phthalate.

Suitable commercially available plasticiser for use in the present invention include but are not limited to Lupranol 1000/1 and Palatinol N from BASF, Caradol ED 56-300 from Shell, Arcol PPG 2000 from Covestro, Voranol 2000 L from DOW and Jeffol PPG 2000 from Huntsman.

The plasticiser may be present in an amount from 1 to 15% by weight of the total weight of the composition, preferably from 2 to 10%, and more preferably from 3 to 7%.

These quantities are preferred because too low quantities, less than 1%, may not have a technical effect, whereas too high quantities, more than 15%, may lead to decreased adhesion properties and initial strength of the bonded structure.

The thermally debondable one-component polyurea adhesive composition according to the present invention may further comprise an adhesion promoter. Adhesion promoters enhance the adhesive properties of the composition.

Suitable adhesion promoters for use in the present invention include but are not limited to γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane, bis(γ-trimethoxysilylpropylamine), γ-ureidopropyltrimethoxysilane, 4-amino-3,3-dimethylbutyltrimethoxysilane, 4-amino-3,3-dimethylbutylmethyldimethoxysilane, N-ethyl-γ-aminoisobutyltrimethoxysilane, γ-methacryloxypropyltrimethoxysilane, γ-methacryloxypropyltriethoxysilane, γ-methacrylamidopropyltrimethoxysilane, γ-methacryloxypropyltriisopropoxysilane, and mixtures thereof.

In a highly preferred embodiment, the adhesion promoter is γ-aminopropyltrimethoxysilane.

Suitable commercially available adhesion promoter for use in the present invention include but is not limited to Dynasylan AMMO from Evonik.

The adhesion promoter may be present in an amount from 0.01 to 2% by weight of the total weight of the composition, preferably from 0.05 to 1%, and more preferably from 0.1 to 0.5%.

The above defined and preferred ranges may be ideal to help to gain good adhesion properties without adversely affecting mechanical properties.

The thermally debondable one-component polyurea adhesive composition according to the present invention may further comprise molecular sieves. The molecular sieves are used to absorb humidity from the composition and improve stability of the composition.

Suitable commercially available molecular sieves for use in the present invention include but are not limited to Molecular sieves 3A from Merc.

The molecular sieves may be present in an amount from 1 to 10% by weight of the total weight of the composition, preferably from 2 to 8%, and more preferably from 2 to 5%.

The above defined and preferred ranges may be ideal to help to gain good humidity absorption and stability without adversely affecting the viscosity of the composition.

The thermally debondable one-component polyurea adhesive composition according to the present invention may be applied on to the surface of the substrate by any available means to form a film. The composition may be applied by using a brushing technique or by using a bar-coater with a guide. The guide of the bar-coater may be 50-micron, 100-micron or even beyond 200-micron guide, preferably, the primer composition is applied by using a bar-coater with 100-micron guide.

Thickness of the thermally debondable one-component polyurea adhesive composition layer on a substrate may be from 20 µm to 300 µm, preferably from 30 µm to 175 µm and more preferably from 45 µm to 150 µm. These thicknesses are for a wet layer, whereas the thickness of a dry layer is about half of the wet layer thickness.

These thicknesses are ideal because they enable the deposition of the microparticles, and in addition may facilitate the peeling of the primer layer from a substrate during expansion of the thermally expandable thermoplastic microspheres.

The present invention also relates to a cured thermally debondable one-component polyurea adhesive composition.

The composition according to the present can be cured in about 3 to 20 minutes at a temperature within the range of about 80°C to about 90°C. When cured, the cured product exhibits a good adhesion.

The present invention also encompasses use of thermally debondable one-component polyurea adhesive composition or cured product according to the present invention in a bonded structure.

The bonded structure according to the present invention comprises: a first substrate; a second substrate; a thermally debondable one-component polyurea adhesive composition layer or cured product layer according to the present invention; and an adhesive layer, wherein the thermally debondable one-component polyurea adhesive composition is disposed on a surface of the first substrate and/or on a surface of the second substrate and wherein the adhesive layer is placed on top of the thermally debondable one-component polyurea adhesive composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

The first and second substrates can be same or different and not limited to any particular substrate material. However, suitable substrate should have a temperature stability below debonding temperature and melting point above 100°C.

Suitable substrates for use in the present invention are, but not limited to aluminium, aluminium alloys, e-coated steel, and PET coated aluminium.

The adhesive layer of the bonded structure according to the present invention may be formed from any kind of adhesive suitable to adhere selected substrates. Suitable adhesive may be one component (1k) composition or a two component (2k) composition. Suitable adhesive may be selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

Suitable commercially available adhesives for use in the present invention include but are not limited to Teroson EP 5065, LOCTITE TLB9150APS and Teroson MS 939 from Henkel AG & Co. KGaA.

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, and various structural adhesive applications and various thermally conductive applications.

The present invention also relates to a method of debonding said bonded structure according to the present invention, the method comprising the steps of: i) applying a heat; and, ii) debonding the surfaces, wherein the temperature applied in step i) is preferably from 80 to 200°C, and it is preferably applied preferably for a duration of from 7 seconds to 60 minutes.

The heat source may be a thermal source, a sonication probe or an electromagnetic source.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.

Structural epoxy adhesive Teroson EP5065 from Henkel

Polyurethane two component adhesive Loctite UK 2073/2173 from Henkel.

Modified silane adhesive TEROSON MS939 from Henkel.
Thermally conductive epoxy adhesive (from Henkel, having a thermal conductivity of 2W/mK and high lap shear strength (e.g. 9.8MPa on Al3003 = structural adhesive). It is curable at room temperature and has a high elongation of 10%)
Expancel 031DU40 from Nouryon.
Rubber spacer (d= 1.6 mm)
Isopropanol (iPrOH)
Bonderite M-NT 1455 W Wipes from Henkel.

### Substrates:

E-coated steel (Rocholl KTL Stahlprüfkörper) having the following dimensions 100 mm x 25 mm x 1.8mm
Aluminium 3003 (Al3003, Rocholl Aluminiumprüfkörper) having the following dimensions 100 mm x 25 mm x 2.0mm
Aluminium 3003 manually wrapped in PET adhesive foil (Al3003/PET) having the following dimensions 100 mm x 25 mm x 2.2mm
Polypropylene substrates - PP (InnoTech, PRÜF10106PP) having the following dimensions 100 mm x 25 mm x 3.0mm.

The substrates were pretreated as follows:
The substrates were rubbed with a piece of paper soaked with iPrOH and let dry.

For Al3003 an additional wiping step using Bonderite M-NT 1455 W Wipes was carried out to create a good adhesive base for debondable layer coating.

The PP substrates were first rubbed with a piece of paper soaked in iPrOH, and later the substrates were flamed using a flaming machine with a speed of 48 m/min and a flame distance of 6 cm.

The AI3003 wrapped in PET were first rubbed with a piece of paper soaked in iPrOH, and later plasma pretreated using atmospheric plasma at distance of 16mm.

Thermally debondable one-component polyurea adhesive composition according to the present invention and comparative examples were prepared in accordance with Table 1 herein below.

**Table 1**

| Material | Example 1 Wt.% |
|---|---|
| Dimeric toluene-2.4-diisocyanate Addolink TT from RC Rhein Chemie | 12.03 |
| Trifunctional primary polyetheramine Jeffamine T5000 from Huntsman | 40.10 |
| Cycloaliphatic diamine Vestamin IPD from Evonik | 0.12 |
| Aromatic diamine curative Primacure DETDA 80 from ARXADA | 3.44 |
| Expandible macrospheres Expancel 920DU80 from Nouryon | 34.38 |
| Carbon black Prttintex U powder from Orion Engineered Carbons LLC | 0.57 |
| Diisononyl phthalate Palatinol N from BASF | 4.64 |
| (1,4-Diazabicyclo[2.2.2]octane) Dabco 33LV dedim Evonik | 0.69 |
| Molecular sieves 3A from Merch | 3.57 |
| Dimethyltin carboxylate Fomrez UL-28 from Galata Chemicals | 0.23 |
| 3-Aminopropyltrimethoxysilane Dynasylan Ammo from Evonik | 0.23 |
| TOTAL | 100 |

### Substrate preparation for Lap Shear measurements

After pretreatment of the substrates as described above, the substrates were assembled using the following procedure.

Half of the substrates were bar-coated with Example 1 depending on the final thickness that wanted to be achieved. The coated substrates were cured using an oven at 90 °C for 20 minutes. Once the samples were cured, the coating thickness resulted to be between 100 - 200 µm depending on the experiment.

Before applying the adhesive, rubber spacers of 1.6mm were applied on the top of the layer of formula 1 with 10 mm between each spacer. This is necessary to provide an even thickness bond line.

The adhesive (LOCTITE UK 2073/2173 or TEROSON 5065) was applied in between the rubber spacer with a total bond line area of 2.5 cm x 1 cm using a manual cartridge pusher through a static mixer.

A second substrate (not coated and cleaned), was mounted and faced with the first substrate containing the adhesive. After removal of the excess adhesive, it was clamped to ensure a good adhesion of the adhesive on the top of the surface.

Once the procedure was repeated for all the substrates. The substrates were cured as follows for different adhesives used: TEROSON EP5065: 2 h 60°C; TEROSON MS939: 2 weeks at 23°C and 50% rh and LOCTITE UK2073/2173: 3 days at room temperature.

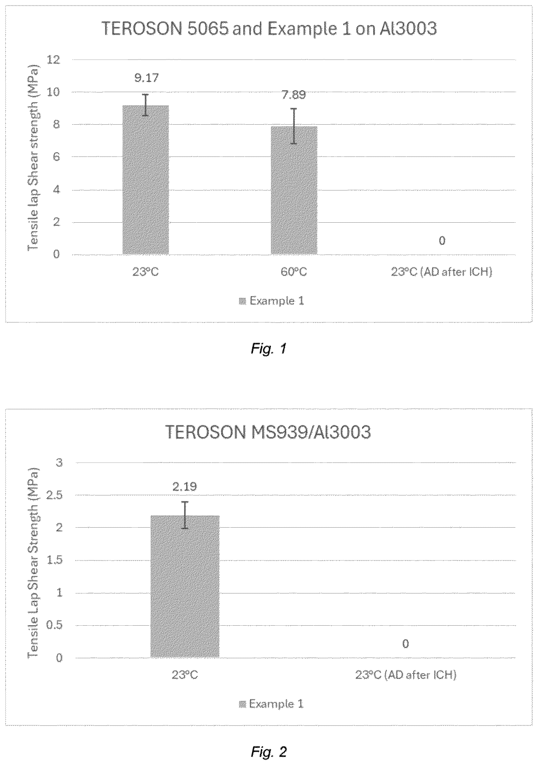

Tensile Lap Shear Strength of TEROSON EP5065 and TEROSON MS939 in combination with composition layer according to the present invention on AI3003
The Lap Shear Strength of TEROSON 5065 in combination with example 1 layer having an average thickness of 105 ± 31 µm was measured before and after debonding. The samples were debonded by using an induction heating device EasyHeat 2.4 kW from Ambrell. The results are illustrated in figure 1. Additionally, Example 1 was also tested in combination with the TEROSON MS939 (modified silane composition) on AI3003. The results are illustrated in figure 2.

Tensile Lap Shear Strength of TEROSON EP5065 in combination with example 1 layer on e-coated steel

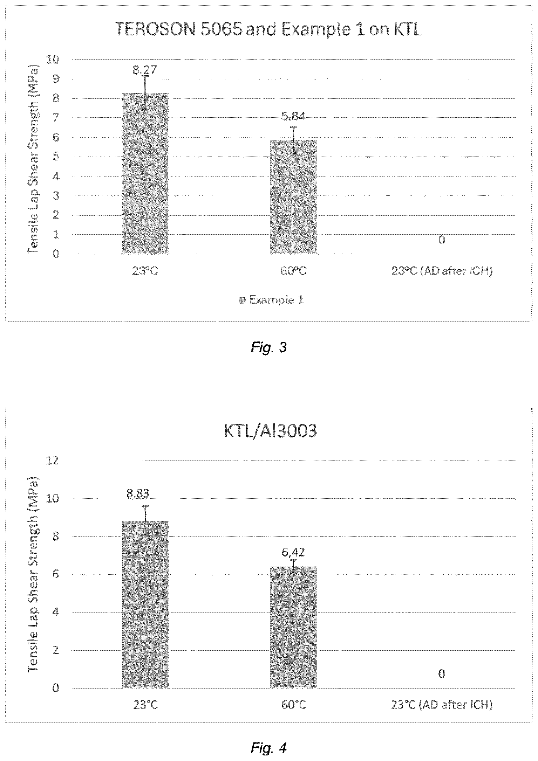

The Lap Shear Strength of the TEROSON 5065 in combination with example 1 layer was measured to evaluate the efficiency on e-coated steel. The results are illustrated in Figure 3.

Tensile Lap Shear Strength of TEROSON EP5065 in combination with example 1 layer on a combination of AL3003 and e-coated steel

In order to simulate a more similar situation for a debonding of the lid in real life, lap shear was measured for mixed substrates. A sample were prepared with the following structure e-coated steel / example 1 layer (120 ± 17 µm) - TEROSON5065 - Al3003. The results are illustrated in figure 4.

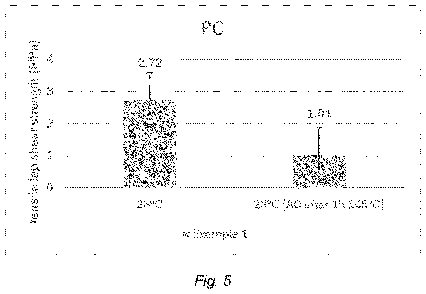

Tensile lap shear strength of UK2073/2173 in combination with example 1 layer on PC
To have a complete overview on different substrates which can be suitable for composition according to the present invention, PC substrates were tested. LOCTITE UK 2073/2173 adhesive used as it is more suitable for plastic substrates. Indeed, PC is known to be particular difficult substrate to bond. As illustrated in Figure 5 it was possible to achieve debonding with a debonding efficiency of almost 63% on a plastic substrate.

## Claims

1. A thermally debondable one-component polyurea adhesive composition comprising
a) dimeric toluene 2,4-diisocyanate;
b) a first amine;
c) a second amine;
d) a curing agent; and
e) thermally expandable thermoplastic microspheres.

2. The thermally debondable one-component polyurea adhesive composition according to claim 1, wherein dimeric toluene 2,4-diisocyanate is present in an amount from 3 to 18% by weight of the total weight of the composition, preferably from 5 to 16%, and more preferably from 8 to 14%.

3. The thermally debondable one-component polyurea adhesive composition according to claim 1 or 2, wherein the first amine is a di- or trifunctional aliphatic or cycloaliphatic amine having a molecular weight (Mn) more than 2000 g/mol, preferably more than 3000 g/mol.

4. The thermally debondable one-component polyurea adhesive composition according to any one claims 1 to 3, wherein the first amine is present in an amount from 30 to 50% by weight of the total weight of the composition, preferably from 33 to 47%, and more preferably from 36 to 44%.

5. The thermally debondable one-component polyurea adhesive composition according to any one of claims 1 to 4, wherein the second amine is a di- or trifunctional aliphatic or cycloaliphatic amine having a molecular weight (Mn) less than 1000g/mol.

6. The thermally debondable one-component polyurea adhesive composition according to any one of claims 1 to 5, wherein the second amine is present in an amount from 0.01 to 2% by weight of the total weight of the composition, preferably from 0.05 to 1%, and more preferably from 0.05 to 0.5%.

7. The thermally debondable one-component polyurea adhesive composition according to any one of claims 1 to 6, wherein the curing agent is selected from the group consisting of diethyltoluenediamine, 4,4-methylenebis(2-chloroaniline), 4-diaminodicyclohexylmethane, bis-(p-aminocyclohexyl) methane, and mixtures thereof, preferably the curing agent is diethyltoluenediamine.

8. The thermally debondable one-component polyurea adhesive composition according to any one of claims 1 to 7, wherein the curing agent is present in an amount from 0.5 to 10% by weight of the total weight of the composition, preferably from 1 to 7%, and more preferably from 2 to 5%.

9. The thermally debondable one-component polyurea adhesive composition according to any one of claims 1 to 8, wherein the thermally expandable thermoplastic microspheres have a core-shell structure, and wherein the shell is formed from cross-linked polymer and the core is composed of a blowing agent.

10. The thermally debondable one-component polyurea adhesive composition according to any one of claims 1 to 9, wherein the thermally expandable thermoplastic microspheres expand when exposed to a heat, preferably exposed to a heat of from 80 to 200°C, preferably from 100 to 160 °C, more preferably from 120 to 155°C.

11. The thermally debondable one-component polyurea adhesive composition according to any one of claims 1 to 10, wherein the thermally expandable thermoplastic microspheres are present from 10 to 50% by weight based on the total weight of the first part of the composition, preferably from 20 to 45% and more preferably from 25 to 40%.

12. Cured thermally debondable one-component polyurea adhesive composition according to any one of claims 1 to 11.

13. Use of thermally debondable one-component polyurea adhesive composition according to any one of claims 1 to 11 or cured product according to claim 12 in a bonded structure.

14. A bonded structure comprising:
a first substrate;
a second substrate;
a thermally debondable one-component polyurea adhesive composition layer according to any one of claims 1 to 11 or cured product layer according to claim 12; and
an adhesive layer,
wherein the thermally debondable one-component polyurea adhesive composition is disposed on a surface of the first substrate and/or on a surface of the second substrate and wherein the adhesive layer is placed on top of the thermally debondable one-component polyurea adhesive composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

15. A method of debonding said bonded structure according to claim 14, the method comprising the steps of:
i) applying a heat; and,
ii) debonding the surfaces,
wherein the temperature applied in step i) is preferably from 80 to 200°C, and it is preferably applied preferably for a duration of from 7 seconds to 60 minutes.
